# EUROPÄISCHE PATENTSCHRIFT

(11) **EP 1 841 635 B1**
(45) Veröffentlichungstag und Bekanntmachung des Hinweises auf die Patenterteilung: **22.10.2008**
(21) Anmeldenummer: 06706363.6
(22) Anmeldetag: 23.01.2006
(51) Int. Cl.: B62D 3/12, F16H 19/04, F16H 35/02

(54) **PROGRESSIVES GETRIEBE**
PROGRESSIVE GEARING
TRANSMISSION PROGRESSIVE

(30) Priorität: 25.01.2005 CH 1082005
(43) Veröffentlichungstag der Anmeldung: 10.10.2007
(60) Teilanmeldung: 08162343.1
(73) Patentinhaber: Bless, Werner M., 8630 Rüti ZH (CH)
(72) Erfinder: ROTT, Erwin, 8630 Rüti ZH (CH); BLESS, Werner M., 8630 Rüti ZH (CH)
(74) Vertreter: Dendorfer, Claus
(86) Internationale Anmeldenummer: PCT/EP2006/000559
(87) Internationale Veröffentlichungsnummer: WO 2006/079492

(56) Entgegenhaltungen:
- DE-A1- 2 618 715
- DE-A1- 10 225 089
- PATENT ABSTRACTS OF JAPAN Bd. 016, Nr. 331 (M-1282), 20. Juli 1992 (1992-07-20) -& JP 04 095570 A (TOYOTA MOTOR CORP), 27. März 1992 (1992-03-27)

## Beschreibung

### Technisches Gebiet

Die Erfindung betrifft ein progressives lenkgetriebe für ein Fahrzeug.

### Stand der Technik

Progressive Getriebe werden beispielsweise für Fahrzeuglenkungen, insbesondere für Kraftfahrzeuge, eingesetzt. Üblicherweise wird eine Drehung eines Lenkrads über eine Lenkwelle auf ein Zahnrad übertragen, welches mit einer Zahnstange im Eingriff steht. Das so getriebene Zahnrad verschiebt die Zahnstange, welche die Radstellungen beeinflusst. Bei einer progressiven Lenkung bzw. einem progressiven Getriebe nimmt das Übersetzungsverhältnis von einem grössten Wert in einem Mittelbereich der Lenkradstellung beim Drehen des Lenkrads ab. Dies bedeutet, dass bei Geradeausstellung des Lenkrads eine relativ grosse Bewegung des Lenkrads lediglich eine kleine Richtungsänderung der Fahrspur verursacht. Beim Manövrieren hingegen, wenn das Lenkrad bereits stark eingeschlagen ist, verursacht bereits eine relativ kleine Drehbewegung eine grosse Richtungsänderung. Dies ist speziell beim Parkieren oder beim Befahren von Kurvenstrassen erwünscht.

Im Stand der Technik werden verschiedene Lösungen zur Erzielung eines progressiven Verhaltens des Getriebes vorgeschlagen. Diese Getriebe sind jedoch relativ kompliziert aufgebaut und deshalb entsprechend teuer in der Herstellung und Wartung. Nachteilig an Getrieben, welche aus einer Vielzahl von Teilen bestehen, ist zudem, dass sie oft ein unerwünschtes Spiel aufweisen oder dass Drehmomentschwankungen in Kauf genommen werden müssen. Auch wird der Umkehrpunkt relativ früh erreicht.

DE-B-1'146'769 offenbart ein Lenkgetriebe für Kraftfahrzeuge mit einem veränderlichen Übersetzungsverhältnis, wobei das Getriebe ein Zahnrad und eine Zahnstange umfasst. Das Zahnrad ist dabei unrund gestaltet und exzentrisch gelagert.

DE-A-39'13'809 schlägt eine Kleinwinkel-Lenkeinrichtung mit einem Paar elliptischer Zahnräder vor.

DE 26 18 715 A1 zeigt ein Getriebe mit zwei in Eingriff stehenden Zahnrädern, deren Teilkreisradius sich im Bereich von 0 bis 360° spiralförmig stetig ändert. Das Getriebe, das für die Gurtaufwickelrolle eines Automatiksicherheitsgurts vorgesehen ist, vermag eine linear zunehmende Drehzahl in eine konstante oder abnehmende Drehzahl umzuwandeln.

JP 04 095570 A offenbart ein progressives Lenkgetriebe mit zwei miteinander in Eingriff stehenden, unrunden Zahnrädern. Jedes der Zahnräder weist einen elliptischen Abschnitt, einen kreisbogenförmigen Abschnitt und zwei interpolierende Zwischenabschnitte auf.

DE 102 25 089 A1 offenbart ein Getriebe zur Dämpfung oder Beschleunigung einer Bewegung von Cupholdem oder Haltevorrichtungen für Aschenbecher, Handschuhkastenfächer oder Ablagefächer in Kraftfahrzeugen. Das Getriebe weist zwei um eine gemeinsame Drehachse drehbare Stirnzahnräder und ein Zahngebilde mit zwei Zahnstangen auf. Eines der Stirnzahnräder ist kreisrund ausgestaltet, während das andere Stirnzahnrad eine Zahnkurve mit abschnittsweise ansteigendem Krümmungsradius aufweist.

### Darstellung der Erfindung

Die Erfindung ist durch die Merkmale von Anspruch 1 definiert. Die abhängigen Ansprüche betreffen optionale Merkmale mancher Ausgestaltungen der Erfindung.

Das erfindungsgemässe progressive Getriebe weist mindestens zwei Stirnzahnräder und ein Zahngebilde mit mindestens einer Zahnstange auf. Die Stirnzahnräder greifen in das Zahngebilde ein. Mindestens eines der Stirnzahnräder weist Zähne auf, welche entlang einer Kurve angeordnet sind, deren Krümmungsradius über einen Winkelbereich von mehr als 90° monoton ansteigt.

So können die Zähne der Stirnzahnräder entlang einer Kurve angeordnet sein, deren Krümmungsradius über einen Winkelbereich von mehr als 90° monoton ansteigt, wobei der restliche Umfangsbereich des Stirnzahnrads geradlinig ausgebildet ist. Der restliche oder zumindest ein Teil des restlichen Umfangsbereichs kann jedoch auch einer Kurve entsprechen, wobei diese Kurve einen Krümmungsradius aufweisen kann, welcher konstant ist oder auch abnehmen kann. Weitere Ausgestaltungsformen im Rahmen der oben beschriebenen Lehre sind selbstverständlich möglich.

In einer bevorzugten Ausführungsform ist die Kurve mit dem monoton ansteigenden Krümmungsradius mindestens abschnittsweise eine Spirale, deren Mittelpunkt vorzugsweise mit einer Drehachse des Stirnzahnrads zusammenfällt.

Vorzugsweise ist diese Spirale logarithmisch, d.h. sie vergrössert den Abstand zu ihrem Mittelpunkt oder Pol mit jeder Umdrehung um den gleichen Faktor.

In bevorzugten Ausführungsformen ist das Zahngebilde mindestens eine Zahnstange, welche geneigt ist. Die Zahl der Zahnstangen entspricht vorzugsweise derjenigen der Stirnzahnräder.

Je nach Form der Stirnzahnräder sind die Zahnstangen geradlinig geneigt oder gekrümmt geneigt ausgebildet. Im Fall eines logarithmischen Kurvenabschnitts des Stirnzahnrads ist der zugehörige Bereich der Zahnstange vorzugsweise geradlinig geneigt ausgebildet. Im Falle eines kreisförmigen Kurvenabschnitts des Stirnzahnrads ist die zugehörige Zahnstange geradlinig und horizontal verlaufend ausgebildet, falls der Mittelpunkt des kreisförmigen Kurvenabschnitts in der Drehachse des Stirnzahnrads liegt. Im Falle eines anderen Verlaufs des Kurvenabschnitts des Stirnzahnrads ist der zugehörige Bereich der Zahnstange entsprechend geneigt und/oder gekrümmt ausgebildet.

Dank entsprechender Anpassung der Stirnzahnräder bzw. Ritzel und Zahngebilde kann der jeweilige Endpunkt der Drehbewegung erst nach % der Umdrehung des Stirnzahnrads oder Ritzels bzw. der Lenkwelle erreicht werden, so dass die Lenkwelle zwischen den zwei Endpunkten 1½ Drehungen ausführen kann. Dies wird insbesondere durch Verwendung von zwei oder mehr Ritzeln, welche auf mindestens zwei parallel versetzt zueinander und mindestens teilweise hintereinander angeordneten Zahnstangen verlaufen, erreicht. Diese Anordnungen weisen ferner den Vorteil auf, dass keine Drehmomentschwankungen auftreten.

Dank der speziellen Form der Zahnräder bzw. Zahnstangen erübrigen sich zusätzliche Bauteile zur Erzielung einer progressiven Lenkung. Die Lenkwelle kann somit direkt am Ritzel befestigt werden, so dass ein spielfreies Getriebe erhalten wird.

Das erfindungsgemässe progressive Getriebe weist einen gleichmässigen DrehmomentVerlauf auf. Durch symmetrische Anordnung der einzelnen Bauteile bzw. durch Verwendung von drei parallel versetzt zueinander verlaufenden Abwickelstrecken der Stirnzahnräder lässt sich ein symmetrischer Kantenlauf erzielen.

Das erfindungsgemässe progressive Getriebe eignet sich insbesondere für normale Strassenverkehrsfahrzeuge wie auch für Sportfahrzeuge.

Erfindungsgemäß besitzt die Kurve, auf welcher die Zähne liegen, dort ihren minimalen Krümmungsradius, wo das Stirnzahnrad das Zahngebilde berührt bzw. kämmt, wenn sich das Lenkgetriebe in der Mittelstellung befindet. Dadurch wird erreicht, dass sich das Übersetzungsverhältnis bei kleinen Auslenkungen aus der Mittelstellung relativ langsam ändert und es kann vermieden werden, dass eine Zahnstange, in welche das Stirnzahnrad eingreift, eine ausgeprägte Zykloidenform mit steilen Flanken besitzen muss.

Ausgehend vom minimalen Krümmungsradius sollte der Krümmungsradius der Kurve über einen Winkelbereich von mindestens 90°, insbesondere mindestens 180° monoton ansteigen. Dies erlaubt eine sanfte, gleichmässige Änderung des Übersetzungsverhältnisses über diesen Winkelbereich.

In der Mittelstellung des Lenkgetriebes ist der Abstand zwischen der Drehachse des Stirnzahnrads und dem Berührungspunkt des Stirnzahnrads mit dem Zahngebilde vorzugsweise minimal, so dass in diesem Bereich das Lenkgetriebe auf Drehungen des Lenkrads am langsamsten reagiert.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1a: eine schematische Seitenansicht eines erfindungsgemässen Getriebes mit Zahnrädern und Zahnstangen in einer ersten Ausführungsform;
- Figur 1b: die Zahnstangen gemäss Figur 1a von oben;
- Figur 1c: eine Graphik der Progression des Getriebes gemäss Figur 1a;
- Figur 1d: eine perspektivische Darstellung einer Variante des Getriebes gemäss Figur 1a mit zwei Zahnstangen;
- Figur 2a: eine Detailansicht eines Zahnrads und einer ersten Variante einer Zahnstange im Bereich ihrer höchsten Erhebung ;
- Figur 2b: das Detail der Zahnstange gemäss Figur 2a von oben;
- Figur 3a: eine schematische Seitenansicht eines erfindungsgemässen Getriebes mit Zahnrädern und Zahnstangen in einer zweiten Ausführungsform;
- Figur 3b: die Zahnstangen gemäss Figur 3a von oben;
- Figur 3c: eine Graphik der Progression des Getriebes gemäss Figur 3a;
- Figur 4a: eine schematische Seitenansicht eines erfindungsgemässen Getriebes mit Zahnrad und Zahnstange in einer dritten Ausführungsform;
- Figur 4b: die Zahnstange gemäss Figur 4a von oben;
- Figur 4c: eine Graphik der Progression des Getriebes gemäss Figur 4a;
- Figur 5a: eine schematische Seitenansicht eines erfindungsgemässen Getriebes mit Zahnrädern und Zahnstangen in einer vierten Ausführungsform;
- Figur 5b: die Zahnstangen gemäss Figur 5a von oben;
- Figur 5c: eine Graphik der Progression des Getriebes gemäss Figur 5a;
- Figur 6a: eine schematische Seitenansicht eines erfindungsgemässen Getriebes mit Zahnrädern und Zahnstangen in einer fünften Ausführungsform;
- Figur 6b: die Zahnstangen gemäss Figur 6a von oben;
- Figur 6c: eine Graphik der Progression des Getriebes gemäss Figur 6a;
- Figur 7a: eine Detailansicht eines Zahnrads und einer zweiten Variante einer Zahnstange im Bereich ihrer höchsten Erhebung ;
- Figur 7b: das Detail der Zahnstange gemäss Figur 7a von oben;
- Figur 8a: eine Detailansicht eines Zahnrads und einer dritten Variante einer Zahnstange im Bereich ihrer höchsten Erhebung;
- Figur 8b: das Detail der Zahnstange gemäss Figur 8a von oben;
- Figur 9a: eine perspektivische Darstellung eines Getriebes in einem Vergleichsbeispiel, und
- Figur 9b: eine schematische Darstellung der Zahnräder gemäss Figur 9a von oben.

### Wege zur Ausführung der Erfindung

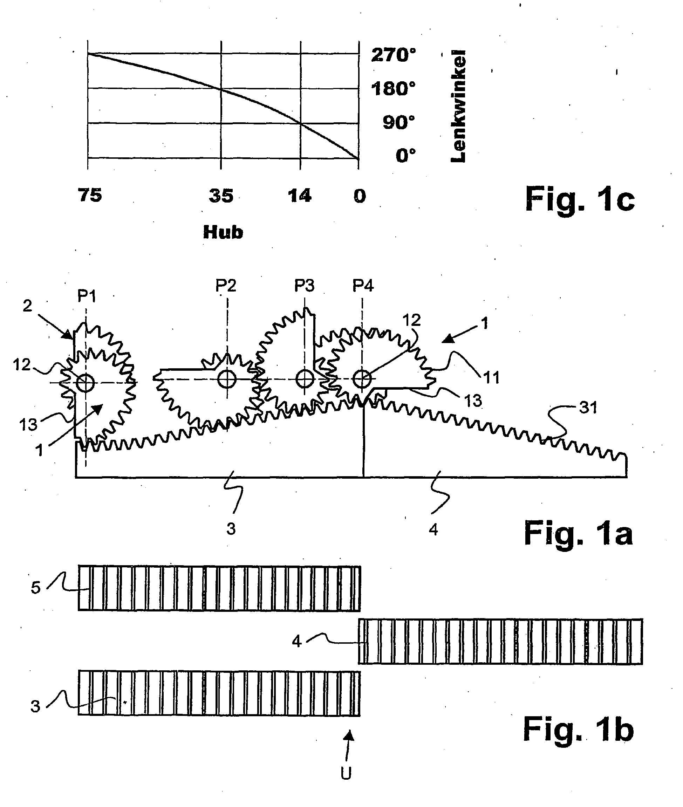

In den Figuren 1a und 1b ist ein erstes Ausführungsbeispiel des erfindungsgemässen progressiven Getriebes dargestellt, wie es beispielsweise in einem Kraftfahrzeug eingesetzt wird. Das Getriebe weist mindestens zwei, vorzugsweise drei Stirnzahnräder 1, 2 auf, welche um eine gemeinsame Drehachse 12 drehbar sind. Hierzu sind die Stirnzahnräder 1, 2 mit einer hier nicht dargestellten Lenkwelle verbunden. Die Lenkwelle wird mittels eines Lenkrades des Fahrzeugs in die jeweils gewünschte Drehposition gebracht.

Jedes der Stirnzahnräder 1, 2 steht mit einem Zahngebilde in Form einer Zahnstange 3, 4, 5 in Eingriff und lässt sich entlang dieser Zahnstange 3, 4, 5 abwälzen. Entweder verschiebt sich dabei die Drehachse 12 entlang einer vorzugsweise horizontal verlaufenden Geraden oder die Zahnstangen 3, 4, 5 werden entsprechend in ihrer Längsrichtung verschoben. Die nur wahlweise vorhandene dritte Zahnstange 5 ist in der Figur 1b heller dargestellt als die erste und zweite Zahnstange 3, 4.

In Figur 1a sind die zwei bzw. drei Stirnzahnräder 1, 2 in mehreren Drehpositionen P1, P2, P3 und P4 entlang der Zahnstangen 4, 5, 6 dargestellt.

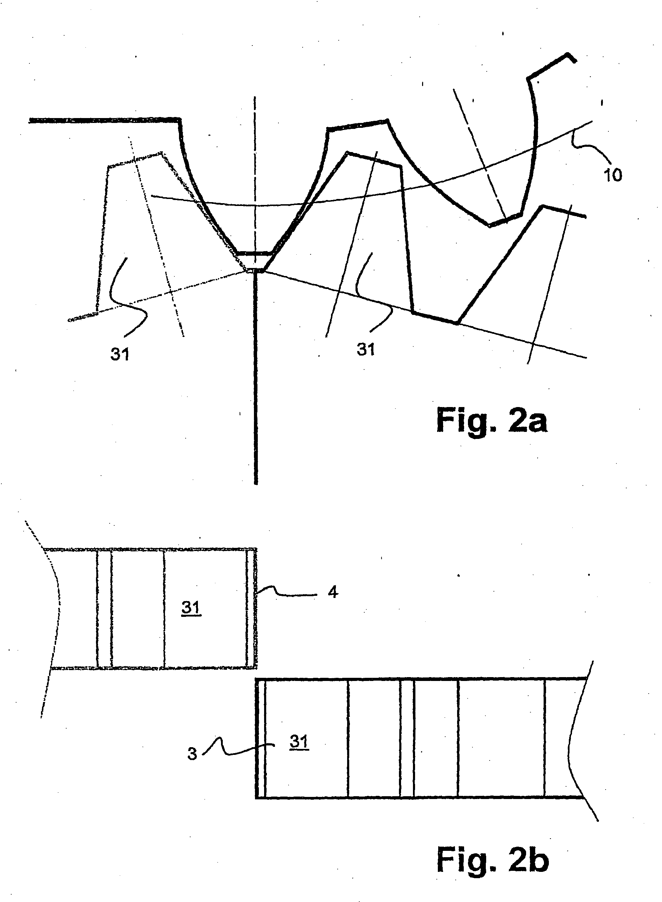

Die Stirnzahnräder 1, 2 weisen Zähne 11 auf, welche entlang einer Kurve 10 (siehe Figur 2a) angeordnet sind. Diese Kurve 10 besitzt einen Krümmungsradius r, welcher über einen Winkelbereich von mehr als 90° der Kurve und somit des Stirnzahnrads 1, 2 monoton ansteigt.

In diesem Beispiel sind die Zähne über einen Winkelbereich von mehr als 180° und weniger als 360° auf der Kurve 10 angeordnet, wobei ein verbleibender Umfangsbereich des Stirnzahnrads 1, 2 zahnlos ausgebildet ist. In der Ausführungsform gemäss den Figuren 1a und 1b ist ein Umfangsbereich von annähernd 270° mit Zähnen 11 bedeckt und der restliche Bereich 13 des Umfangs des Stirnzahnrads ist geradlinig ausgebildet.

Der Mittelpunkt der Kurve 10 verbleibt dabei vorzugsweise relativ zum Stirnzahnrad 1, 2 positionsfest und fällt zudem vorzugsweise mit der Drehachse 12 des Stirnzahnrads 1, 2 zusammen.

Im hier dargestellten Ausführungsbeispiel ist die Kurve 10 eine Spirale, insbesondere eine logarithmische Spirale. Ihr Mittelpunkt fällt vorzugsweise mit der Drehachse 12 des Stirnzahnrads 1, 2 zusammen.

Die in diesem Ausführungsbeispiel verwendeten zwei bzw. drei Stirnzahnräder 1, 2 weisen dieselbe Anzahl Zähne und dieselbe Kurvenform auf. Vorzugsweise sind sie auch im übrigen identisch ausgebildet. Das erste und das zweite Stirnzahnrad 1, 2 sind jedoch in unterschiedlichen Positionen und spiegelsymmetrisch relativ zueinander angeordnet. Vorzugsweise weisen ihre Bereiche mit den längsten Krümmungsradien r in um 180° entgegengesetzte Richtungen, die Bereiche mit den kürzesten Krümmungsradien r jedoch in dieselbe Richtung. Dies ist in Figur 1a in Position P1 und P4 am besten erkennbar. Das dritte Stirnzahnrad ist parallel versetzt zum ersten Zahnrad 1 angeordnet und weist dieselbe Ausrichtung auf wie dieses. Dadurch ist es in Figur 1a deckungsgleich mit dem ersten Stirnzahnrad 1 und deshalb nicht sichtbar.

Die Flankenformen der einzelnen Zähne der Stirnzahnräder 1, 2 und der Zahnstangen 3, 4, 5 sind entsprechend optimiert, um eine möglichst reibungsfreie und geräuscharme Abwicklung der einzelnen Zahnräder 1, 2 auf den Zahnstangen 3, 4, 5 zu ermöglichen. Dies ist jedoch bekanntes Fachwissen und es wird deshalb hier nicht näher darauf eingegangen.

Die Zahnstangen 3, 4, 5. sind in diesem Beispiel geradlinig, jedoch geneigt ausgebildet. Die Neigung ermöglicht unter anderem eine Abwälzung der Stirnzahnräder auf den Zahnstangen bei gleichbleibender Höhe der Rotationsachsen der Stirnzahnräder. Die Zahnstangen sind parallel versetzt zueinander und mindestens teilweise hintereinander angeordnet. Die erste und dritte Zahnstange 3, 5 verlaufen dabei parallel versetzt zueinander, wobei sie nebeneinander angeordnet sind. Vorzugsweise sind sie identisch ausgebildet und weisen dieselbe Steigung auf. Zwischen ihnen ist die zweite Zahnstange 4 angeordnet, wobei ihr Anfangsbereich mit dem Endbereich der ersten und dritten Zahnstange 3, 5 überlappt. Sie weist vorzugsweise dieselbe, aber der ersten und dritten Zahnstange 3, 5 entgegengesetzte Steigung auf. In einem Übergangsbereich U weisen die Zahnstangen 3, 4, 5 jeweils ihre höchste Erhebung auf

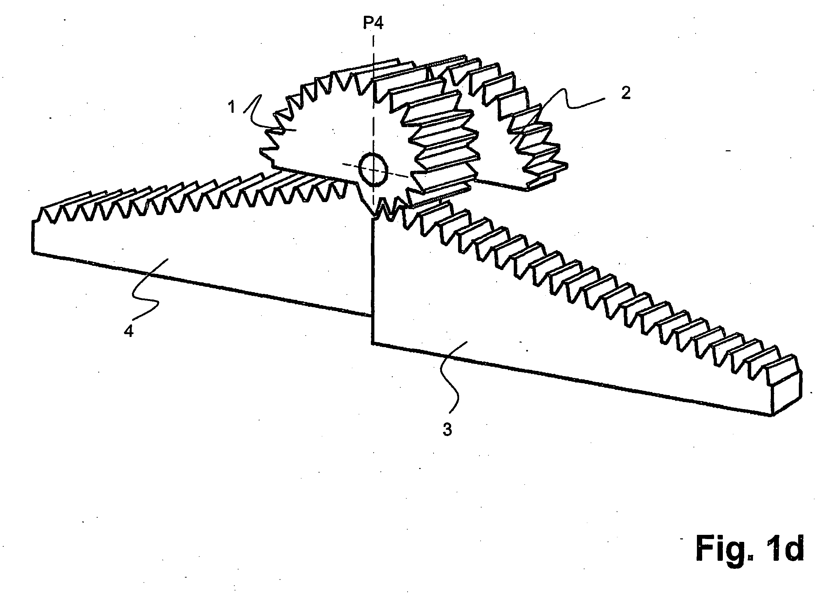

Die Mittelstellung des Lenkrads und somit der Zahnräder 1, 2 entspricht vorzugsweise der Position P4, also wenn sich die Zahnräder 1, 2 auf der höchsten Erhebung der Zahnstangen 3, 4, 5 befinden. Bei Drehung des Lenkrads nach links werden die Positionen P3, P2, und P1 durchlaufen. Dabei greifen das erste und, falls vorhanden, das dritte Zahnrad 1 in die entsprechenden Zahnstangen 3, 5 ein. In Abhängigkeit ihrer Drehstellung kontaktieren die Zahnräder 1 dabei die Zahnstangen in Kontaktlinien bzw. -punkten, welche einem monoton ansteigenden Krümmungsradius der Kurve 10 zugeordnet sind. Das heisst, in Position P4 ist der Zahn des Zahnrads, welcher in die Zahnstange eingreift, dem kleinsten Krümmungsradius zugeordnet, in Position P1 dem grössten. Das mittlere zweite Zahnrad 2 dreht sich ohne Eingriff in eine Zahnstange im leeren Raum. Dieses Drehen ohne Eingriff ist insbesondere in Figur 1d gut erkennbar.

Der Krümmungsradius r der Kurve ist dort minimal, wo sich die Zahnräder 1, 2 und die Zahnstangen 3, 4, 5 bei Mittelstellung des Lenkrads, d.h. in der Position P4, berühren. Der minimale Krümmungsradius der Kurve ist jedoch vorzugsweise grösser als der minimale Abstand zwischen der Kurve bzw. den Zähnen und der Drehachse 12, so dass die Übersetzung bei einer Auslenkung des Lenkrads aus der Mittelstellung kleiner wird.

Wird das Lenkrad nach rechts gedreht, so verlaufen das erste und dritte Zahnrad 1 eingriffslos und das zweite Zahnrad 2 greift in seine entsprechende Zahnstange 4 ein. Auch hier wälzen sie sich aus der Mittelposition P4 vom kleinsten Krümmungsradius zum grössten Krümmungsradius hin ab. In Figur 1d ist erkennbar, wie sich jeweils ein Zahnrad im Eingriff mit einer Zahnstange dreht und das andere Zahnrad bzw. die anderen Zahnräder leer drehen.

Der durch die Abwälzung von Position P4 zur Position P1 erzielte Hub ist in Figur 1c dargestellt. Wie erkennbar ist, kann über einen Winkelbereich von 270° ein monoton anwachsender Hub erreicht werden. Diese bedeutet, dass das Lenkrad um 270° gedreht werden kann, bis der Endpunkt des Getriebes erreicht wird. Da sich das Lenkrad mit derselben Wirkung in beide Richtungen drehen lässt, sind somit 1½ Umdrehungen möglich, bis die jeweiligen Endpunkte erreicht werden.

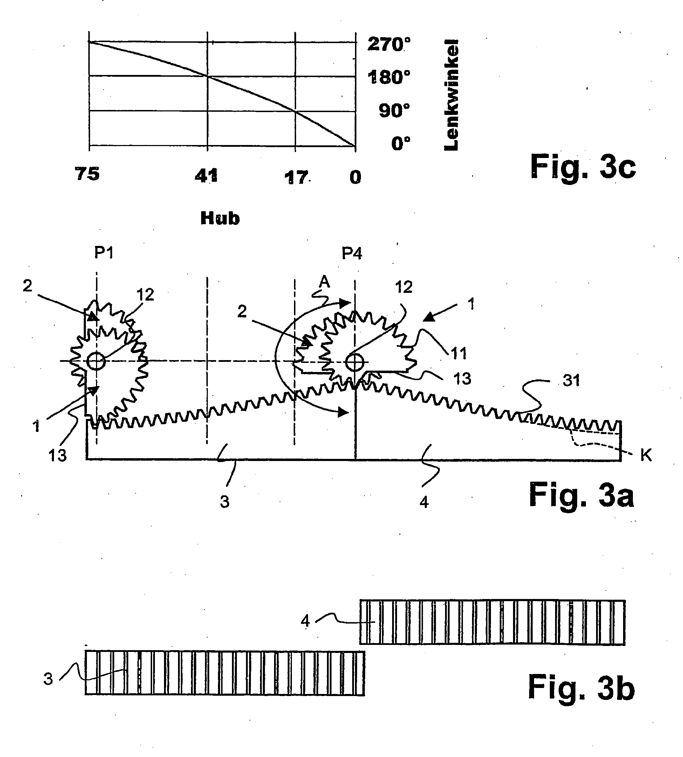

In den Figuren 3a bis 3d ist eine zweite Ausführungsform des erfindungsgemässen Getriebes dargestellt. Es werden zwei Stirnzahnräder 1, 2 und zwei Zahnstangen 3, 4 verwendet. In Figur 3a sind diese zwei Zahnräder in der Mittelposition P4 und in einer ihrer zwei äussersten Positionen P1 dargestellt. Die Zähne der Stirnzahnräder 1, 2 sind nun über einen Winkelbereich A von annähernd 180° entlang einer logarithmische Spirale angeordnet. Im anschliessenden Winkelbereich von etwas mehr als 90° weist die Kurve einen noch monoton anwachsenden Krümmungsradius auf, die Kurve entspricht jedoch nicht mehr einer logarithmischen Spirale. Der Umfang im restlichen Winkelbereich ist wiederum geradlinig ausgestaltet. Dabei sind die Stirnzahnräder 1, 2 so auf ihrer Drehachse 12 montiert, dass in der Grundstellung des Lenkrads, d.h. im Bereich der höchsten Erhebung der Zahnstangen 3,4, zuerst der Bereich mit der Form der logarithmischen Spirale abgewälzt wird.

Angepasst an die Form der Stirnzahnräder 1, 2 sind die Zahnstangen 3, 4 zuerst, d.h. startend von ihrer höchsten Erhebung aus, geradlinig geneigt ausgebildet und gehen anschliessend in eine geneigte, aber gekrümmte Kurve K über.

In Figur 3c ist wiederum der Hub in Abhängigkeit des Lenkwinkels dargestellt. Im Vergleich zur ersten Ausführungsform gemäss den Figuren 1a bis 1c verläuft nun Graph im Winkelbereich zwischen 180° und 270° schwächer gekrümmt.

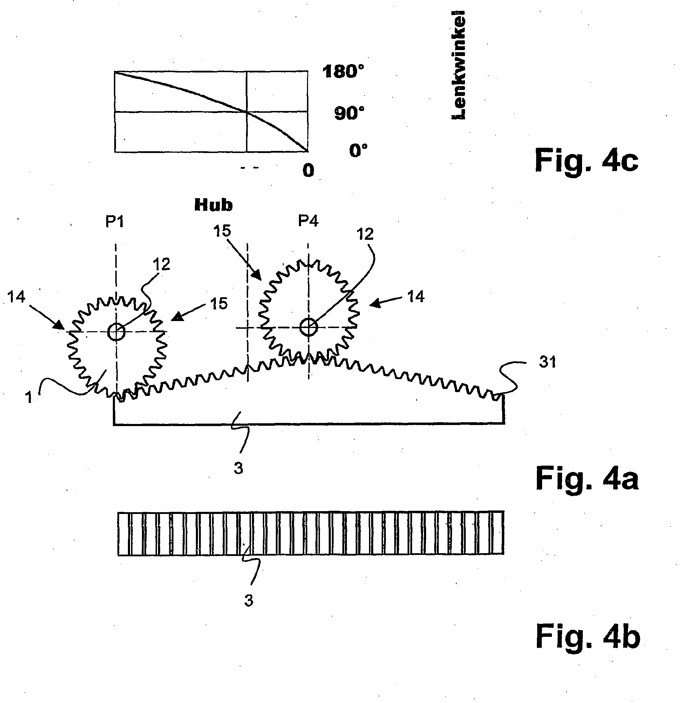

In der Ausführungsform gemäss den Figuren 4a bis 4c sind nur ein Stirnzahnrad 1 und nur eine Zahnstange 3 vorhanden, wobei das Zahnrad 1 wiederum in seiner Mittelposition P4 und in einer seiner zwei äussersten Positionen P1 dargestellt ist. Die Zähne 11 des Stirnzahnrads 1 sind bezüglich positiver und negativer Drehungen des Zahnrads 1 ausgehend von seiner Mittelstellung symmetrisch auf der Kurve angeordnet. Die Zähne 11 lassen sich in zwei Zahngruppen 14, 15 gruppieren. Jeder Zahngruppe 14, 15 ist eine Kurve 10 zuzuordnen, wobei sich die zwei Kurven 10 jeweils über eine Winkelbereich von 180° erstrecken. Sie sind spiegelsymmetrisch zu einer Ebene, in welcher die Drehachse 12 liegt, und weisen denselben Mittelpunkt auf, welcher vorzugsweise mit der Drehachse 12 zusammenfällt. Ihr Umlaufsinn ist jedoch entgegengesetzt. Dadurch wird ein "eiförmiges" Zahnrad erhalten, bei welchem der Übergang von einer Kurve in die andere stetig verläuft, so dass die jeweils grössten bzw. kleinsten Krümmungsradien zusammenfallen. Die Zahnstange 3 ist, falls die zwei Kurven des Zahnrads 1 je eine logarithmische Spirale sind, wiederum geradlinig ausgebildet, wobei sie in beide Richtungen, ausgehend von der Mittelstellung als höchsten Punkt, geneigt ist. Wie in Figur 4c erkennbar ist, ist die Auslenkung auf jeder Seite 180°. Dafür weist das Getriebe eine minimale Anzahl Bauteile auf und lässt sich entsprechend kompakt und platzsparend ausbilden. Zudem ist die Herstellung kostengünstig.

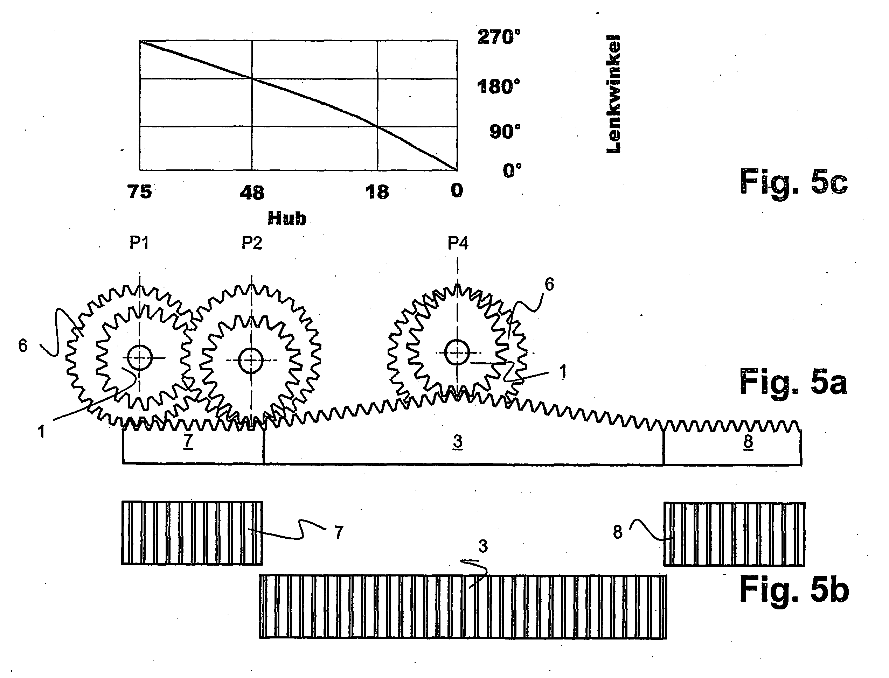

Die Ausführungsform gemäss den Figuren 5a bis 5c verwendet wiederum zwei Stirnzahnräder 1, 6 und drei mindestens teilweise hintereinander und teilweise parallel versetzt zueinander angeordnete Zahnstangen 3, 7, 8. Die Zahnräder 1, 6 sind in drei Positionen P1, P2, P4 dargestellt. Das erste Zahnrad 1 ist ein Zahnrad gemäss der in Figur 4a dargestellten Ausführungsform und die zum ersten Zahnrad 1 gehörende Zahnstange 3 ist geradlinig und in zwei Richtungen geneigt ausgebildet. Beim zweiten Zahnrad 6 sind die Zähne auf einem Kreis oder einer Ellipse angeordnet. Dieses Zahnrad 6 wälzt sich auf zwei Zahnstangen 7, 8 ab. Die Zähne dieser Zahnstangen 7, 8 sind entlang einer horizontal und geradlinig verlaufenden Linie angeordnet. Ausgehend von der Mittelposition P4 lassen sich die gemeinsam gelagerten Zahnräder nach rechts oder links drehen. In Figur 5a sind einzelne Positionen bei Drehung nach links dargestellt. Zuerst greift das spiralförmige Zahnrad 1 in die zugehörige geneigte Zahnstange 3 ein. Das runde Zahnrad 6 dreht leer. Wird die 180° Drehposition erreicht, so endet die geneigte Zahnstange 3 und das spiralförmige Zahnrad 1 dreht nun ins Leere. Dafür hat dank dem Überlappungsbereich der zwei Zahnstangen 3, 7 das runde Zahnrad 6 übernommen und wälzt sich nun auf der ersten geraden Zahnstange 7 über einen weiteren Winkelbereich von mindestens 90° ab. Bei Drehung nach rechts kämmt das runde Zahnrad 6 die zweite gerade Zahnstange 8, welche als geradlinige, aber in Längsrichtung beabstandete Verlängerung der ersten geraden Zahnstange 7 angeordnet ist. Wie in Figur 5c erkennbar ist, erfolgt der Endpunkt bei dieser Anordnung wiederum erst nach 270° pro Drehrichtung, wobei im Lenkwinkelbereich zwischen 180° und 270° der Hub geradlinig verläuft. Der Hubverlauf bei grossen Auslenkungen lässt sich wählen, indem anstelle des runden Zahnrads und der geraden Zahnstange entsprechend angepasste Kurvenformen verwendet werden, wie sie anhand des Beispiels gemäss den Figuren 3a bis 3d erläutert wurden. Als Variante zu dieser Anordnung lässt sich zudem der horizontal verlaufende Zahnstangenbereich beliebig verlängern, um mehr Umdrehungen zu ermöglichen. Diese Variante eignet sich insbesondere für Nutzfahrzeuge.

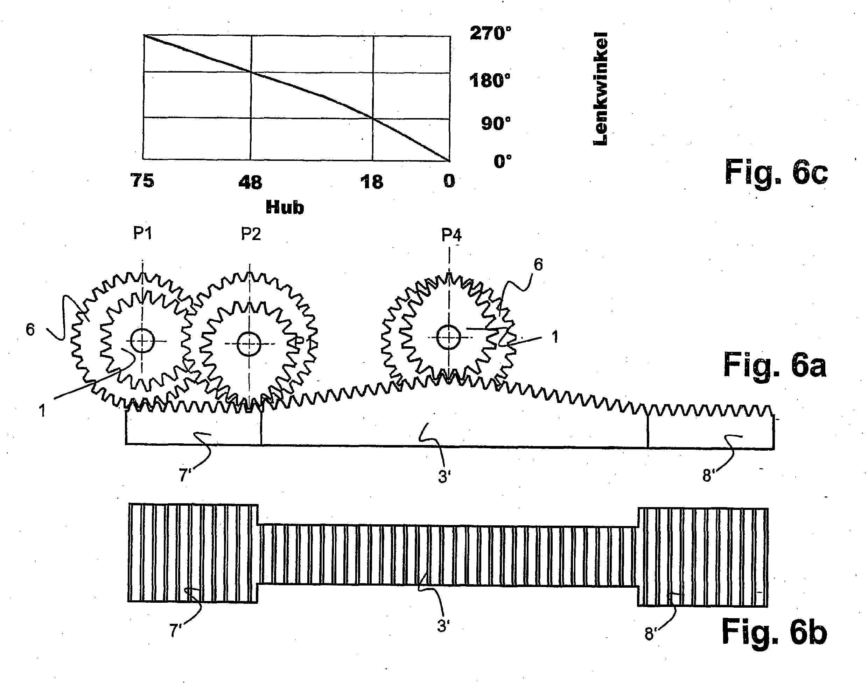

Das Ausführungsbeispiel gemäss den Figuren 6a bis 6c entspricht im wesentlichen demjenigen der Figuren 5a bis 5c. Hier ist sind die zwei geraden Zahnstangen jedoch nicht getrennte Gebilde, sondern einstückig an der geneigten Zahnstange angeformt oder zumindest mit dieser verbunden. Dadurch wird eine Zahnstange erhalten, welche mindestens einen, hier zwei breite Bereiche 7', 8' und einen mittleren schmalen Bereich 3' aufweist. In Abhängigkeit der Drehstellung der Lenkwelle und somit der Zahnräder 1, 6 greift nun das spiralförmige Zahnrad 1 in den schmalen Bereich 3' ein oder das runde Zahnrad 6' greift in einen der breiten Bereiche 7', 8' ein. In Figur 6b ist erkennbar, dass die Zahnstange auf beiden Seiten verbreitert ist. Diese Form empfiehlt sich, wenn anstelle von einem runden Zahnrad 6 zwei runde Zahnräder verwendet werden, welche auf je einer Seite des spiralförmigen Zahnrads 1 angeordnet sind. Dadurch wird wiederum ein symmetrischer Kantenlauf gewährleistet.

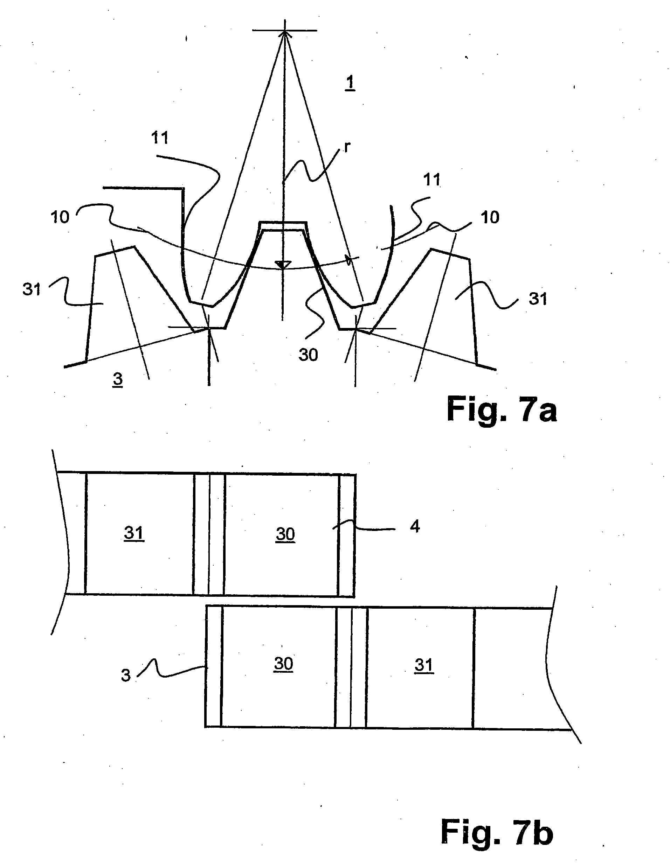

Der Bereich der höchsten Erhebung der Zahnstange kann auf unterschiedliche Weise gestaltet sein. In den Figuren 7a und 7b ist eine erste Variante dargestellt. Hier ist die höchste Erhebung mit einem Mittelzahn 30 versehen, wobei in diesem Beispiel beide bzw. im Fall von drei Zahnstangen alle drei Zahnstangen einen derartigen Mittelzahn 30 aufweisen. Diese Anordnung ermöglicht einen gleichmässigen Verlauf.

In den Figuren 2a und 2b ist eine weitere Variante der Ausbildung der höchsten Erhebung der Zahnstangen dargestellt. Hier ist nun kein Mittelzahn vorhanden, sondern jede Zahnstange endet mit einem schräg gestellten Zahn 31, dessen Winkel und Abstand zum nächsten Zahn derselben Zahnstange der Anordnung der restlichen Zähne dieser Zahnstange entspricht. Dabei endet die eine Zahnstange bevor die andere beginnt, d.h. es sind keine überlappenden Zähne vorhanden. Diese Variante ist einfach herzustellen.

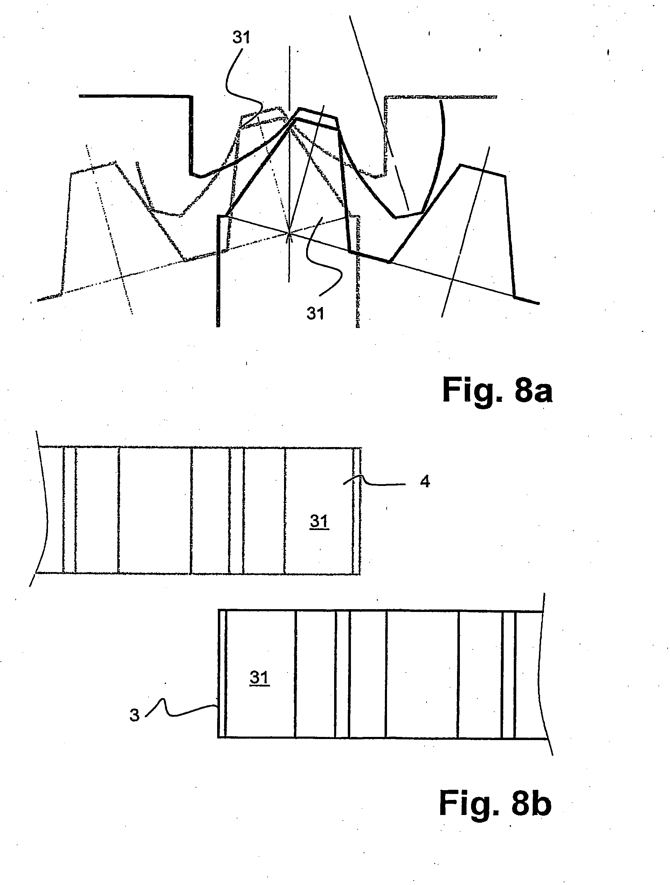

Bei der Ausgestaltung der höchsten Erhebung gemäss den Figuren 8a und 8b sind die Zahnstangen gemäss dem obigen Ausführungsbeispiel geformt, d.h. die obersten Zähne 31 sind schräggestellt und entsprechen den übrigen Zähnen. In diesem Fall hier überlappen sie jedoch mit dem obersten Zahn 31 der benachbarten Zahnstange. Diese Variante weist den Vorteil auf, dass sie wiederum einfach herstellbar ist, dass jedoch die Abwälzung der Ritzel gleichmässiger verläuft als bei der Variante gemäss den Figuren 2a und 2b.

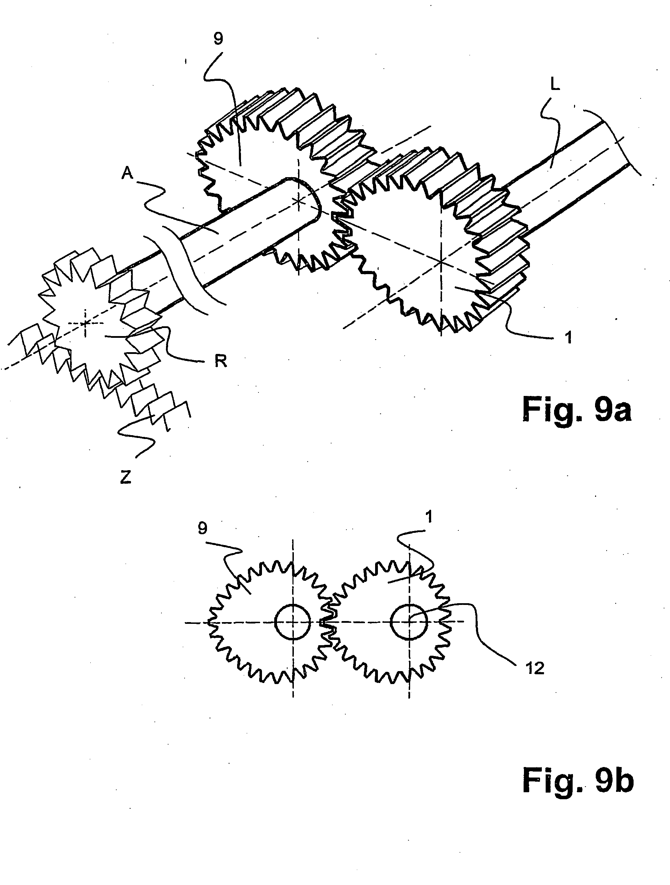

Das Vergleichsbeispiel gemäss den Figuren 9a und 9b unterscheidet sich von den vorhergehenden insbesondere darin, dass das Zahngebilde keine Zahnstange, sondern ein weiteres Stirnzahnrad, ein Abtriebsrad 9, ist. Das Stirnzahnrad 1 ist über die hier nun teilweise dargestellte Antriebs- oder Lenkwelle L mit dem Lenkrad verbunden und 5 entspricht einem Antriebsrad. Dieses ist über eine Abtriebswelle A mit einem Ritzel R und einer Zahnstange Z eines konventionellen Ritzel/Zahnstangengetriebes verbunden.

Das Abtriebszahnrad 9 weist vorzugsweise dieselbe Form auf wie das Zahnrad gemäss Figur 4a und wird hier deshalb nicht mehr im Detail beschrieben. Es kämmt mit seinen Zähnen 10 das Abtriebsrad 9, welches vorzugsweise ebenfalls wie das Zahnrad gemäss Figur 4a ausgebildet ist und somit dieselbe Kurvenform und dieselbe Anzahl Zähne aufweist wie das Antriebsrad 1. Vorzugsweise sind die zwei Stirnzahnräder 1, 9 identisch ausgebildet. Sie können jeweils zwei logarithmische Spiralen aufweisen oder auch andere Kurvenformen aufweisen, solange die Krümmungsradien der Kurven über einen Winkelbereich von 90° monoton ansteigen und sie sich gegenseitig ergänzen. Die Mittelpunkte der Kurven fallen im hier dargestellten Beispiel wiederum mit den Drehachsen der jeweiligen Zahnräder zusammen. In den Figuren 9a und 9b sind sie übrigens in einer Drehstellung dargestellt, welche nicht der Mittelstellung des Lenkrads, sondern der um 180° gedrehten Stellung entspricht.

In den oben beschriebenen Beispielen fallen die Mittelpunkte der Kurven jeweils mit den Drehachsen der Zahnräder zusammen. Zudem sind die Drehachsen auch die Lagerachse der Zahnräder. Dies sind bevorzugte Ausführungsformen. Es ist jedoch auch möglich, die Zahnräder anders zu lagern bzw. die Drehachsen ausserhalb der Mittelpunkte der Kurven anzuordnen. Wie bereits oben erwähnt ist die logarithmische Spirale die bevorzugte Kurvenform, wobei andere Kurven, welche über einen Winkelbereich von mindestens 90° monoton ansteigende Krümmungsradien aufweisen, ebenfalls möglich sind, sofern die Zahnstange bzw. das mit dem Zahnrad kämmende weitere Zahnrad entsprechend angepasst geformt ist. Des weiteren sei noch festgehalten, dass auch Kombinationen der Lehren der einzelnen Ausführungsformen möglich und Teil dieser Offenbarung sind.

### Bezugszeichenliste

- 1: Erstes Stirnzahnrad
- 10: Kurve
- 11: Zahn
- 12: Drehachse
- 13: Restliche Bereich
- 14: Erste Zahngruppe
- 15: Zweite Zahngruppe
- 2: Zweites Stirnzahnrad
- 3: Erste Zahnstange
- 3': schmaler Bereich
- 30: Mittelzahn
- 31: Zähne
- 4: Zweite Zahnstange
- 5: Dritte Zahnstange
- 6: Rundes Zahnrad
- 7: Erste gerade Zahnstange
- 7': breiter Bereich
- 8: Zweite gerade Zahnstange
- 8': schmaler Bereich
- 9: Abtriebsrad
- A: Abtriebswelle
- L: Lenkwelle
- R: Ritzel
- Z: Zahnstange
- r: Krümmungsradius
- P1, P2, P3, P4: Drehposition
- U: Überlappungsbereich
- K: gekrümmte Linie

## Patentansprüche

1. Progressives Lenkgetriebe für ein Fahrzeug, mit:
- mindestens zwei Stirnzahnrädern (1, 2), die um eine gemeinsame Drehachse (12) drehbar sind, und
- einem Zahngebilde (3, 4, 5, 7, 8), in welches die Stirnzahnräder (1, 2) eingreifen, wobei
- mindestens eines der Stirnzahnräder (1, 2) Zähne (11) aufweist, welche entlang einer Kurve (10) angeordnet sind, wobei die Kurve (10) einen Krümmungsradius (r) aufweist, welcher über einen Winkelbereich von mehr als 90° der Kurve (10) monoton ansteigt,
- das Zahngebilde (3, 4, 5, 7, 8) mindestens eine Zahnstange (3, 4, 5) aufweist, und
- in einer Mittelstellung des Lenkgetriebes die einen ansteigenden Krümmungsradius (r) aufweisende Kurve (10) zumindest eines der Stirnzahnräder (1, 2) in einem Berührungsbereich dieses Stirnzahnrads (1, 2) mit dem Zahngebilde (3, 4, 5, 7, 8) einen minimalen Krümmungsradius (r) aufweist.

2. Getriebe nach Anspruch 1, wobei die Kurve (10) mindestens eines der Stirnzahnräder (1, 2) eine Spirale ist.

3. Getriebe nach Anspruch 1 oder Anspruch 2, wobei die Kurve (10) mindestens eines der Stirnzahnräder (1, 2) einen Mittelpunkt aufweist, welcher mit der Drehachse (12) der Stirnzahnräder (1, 2) zusammenfällt.

4. Getriebe nach einem der Ansprüche 2 oder 3, wobei die Kurve (10) mindestens bereichsweise eine logarithmische Spirale ist.

5. Getriebe nach Anspruch 4, wobei die Kurve (10) über mindestens einen Winkelbereich von 90° eine logarithmische Spirale ist.

6. Getriebe nach einem der Ansprüche 1 bis 5, wobei die Zähne (11) mindestens eines der Stirnzahnräder (1, 2) über einen Winkelbereich von mehr als 180° und weniger als 360° auf der Kurve (10) angeordnet sind und wobei ein verbleibender Umfangsbereich dieses Stirnzahnrads (1, 2) zahnlos ausgebildet ist.

7. Getriebe nach Anspruch 6, wobei der Winkelbereich annähernd 270° beträgt.

8. Getriebe nach einem der Ansprüche 1 bis 7, wobei das Getriebe zusätzlich mindestens ein Stirnzahnrad (6) aufweist, dessen Zähne auf einem Kreis angeordnet sind.

9. Getriebe nach einem der Ansprüche 1 bis 8, wobei die mindestens eine Zahnstange (3, 4, 5) geneigt ausgebildet ist.

10. Getriebe nach Anspruch 9, wobei die mindestens eine Zahnstangen (3, 4, 5) an ihrer höchsten Erhebung einen Mittelzahn aufweist.

11. Getriebe nach einem der Ansprüche 1 bis 10, wobei das Zahngebilde mindestens zwei Zahnstangen (3, 4, 5) aufweist, die mindestens teilweise hintereinander und parallel versetzt zueinander angeordnet sind.

12. Getriebe nach Anspruch 11, wobei je eines der Stirnzahnräder (1, 2) mit je einer der Zahnstangen (3, 4, 5) im Eingriff steht.

13. Getriebe nach den Ansprüchen 9 und 11, wobei die mindestens zwei mindestens teilweise hintereinander angeordneten Zahnstangen (3, 4, 5) einander entgegengesetzte Steigungen aufweisen und wobei sie in einem einander benachbarten Bereich jeweils eine höchste Erhebung besitzen.

14. Getriebe nach einem der Ansprüche 1 bis 11, wobei die mindestens eine Zahnstange mindestens einen breiten und einen schmalen Bereich (3', 7', 8') aufweist, wobei in Abhängigkeit einer Stellung der Stirnzahnräder (1, 2) ein erstes Stirnzahnrad (1) im schmalen Bereich (3') eingreift beziehungsweise mindestens ein anderes Stirnzahnrad (6) im breiten Bereich (7', 8') eingreift.

15. Getriebe nach einem der Ansprüche 1 bis 14, wobei die mindestens eine Zahnstange (3, 4, 5) Zähne aufweist, welche geradlinig angeordnet sind.

16. Getriebe nach einem der Ansprüche 1 bis 15, wobei die mindestens eine Zahnstange (3, 4, 5) Zähne aufweist, welche entlang einer gekrümmten Linie (K) angeordnet sind.

17. Getriebe nach einem der Ansprüche 1 bis 16, wobei der Krümmungsradius (r) der Kurve (10), die in dem Berührungsbereich den minimalen Krümmungsradius (r) aufweist, ausgehend vom minimalen Krümmungsradius (r) über einen Winkelbereich von mindestens 90° monoton ansteigt.

18. Getriebe nach Anspruch 17, wobei der Winkelbereich mindestens 180° beträgt.

19. Getriebe nach einem der Ansprüche 1 bis 18, wobei in einer Mittelstellung des Lenkgetriebes der Abstand zwischen der Drehachse (12) der Stirnzahnräder (1, 2) und dem Berührungsbereich des zumindest einen der Stirnzahnräder (1, 2) mit dem Zahngebilde (3, 4, 5, 7, 8) minimal ist.

20. Getriebe nach einem der Ansprüche 1 bis 19, wobei ein erstes und ein zweites der mindestens zwei Stirnzahnräder (1, 2) Zähne (11) aufweist, welche entlang je einer Kurve (10) angeordnet sind, wobei jede dieser Kurven (10) einen Krümmungsradius (r) aufweist, welcher über einen Winkelbereich von mehr als 90° dieser Kurve (10) monoton ansteigt.

21. Getriebe nach Anspruch 20, wobei das erste und das zweite der mindestens zwei Stirnzahnräder (1, 2) spiegelsymmetrisch angeordnet sind.

22. Getriebe nach Anspruch 20 oder Anspruch 21, wobei ein Bereich des ersten Stirnzahnrads (1) mit minimalem Krümmungsradius (r) und ein Bereich des zweiten Stirnzahnrads (2) mit minimalem Krümmungsradius (r) in dieselbe Richtung weisen.

23. Getriebe nach einem der Ansprüche 20 bis 22, wobei ein drittes Stirnzahnrad auf der gemeinsamen Drehachse (12) deckungsgleich mit dem ersten Zahnrad, aber parallel zu diesem versetzt, angeordnet ist.

## Claims

1. A progressive steering gear for a vehicle, comprising:
- at least two spur gears (1, 2) that are rotatable about a common axis of rotation (12), and
- a toothed structure (3, 4, 5, 7, 8) with which the spur gears (1, 2) mesh, wherein
- at least one of the spur gears (1, 2) comprises teeth (11) arranged along a curve (10), wherein the curve (10) has a radius of curvature (r) which monotonically increases over an angular range of more than 90° of the curve (10),
- the toothed structure (3, 4, 5, 7, 8) comprises at least one gear rack (3, 4, 5), and
- in a center position of the steering gear, the curve (10) having an increasing radius of curvature (r) of at least one of the spur gears (1, 2) has a minimum radius of curvature (r) in a region in which this spur gear (1, 2) contacts the toothed structure (3, 4, 5, 7, 8).

2. The gear as set forth in claim 1 wherein the curve (10) of at least one of the spur gears (1, 2) is a spiral.

3. The gear as set forth in claim 1 or claim 2 wherein the curve (10) of at least one of the spur gears (1, 2) comprises a center point which coincides with the axis of rotation (12) of the spur gears (1, 2).

4. The gear as set forth in claim 2 or claim 3 wherein the curve (10) is a logarithmic spiral at least portionwise.

5. The gear as set forth in claim 4 wherein the curve (10) is a logarithmic spiral over at least an angular range of 90°.

6. The gear as set forth in any one of claims 1 to 5 wherein the teeth (11) of at least one of the spur gears (1, 2) are arranged over an angular range of more than 180° and less than 360° on the curve (10), and wherein a remaining circumferential portion of this spur gear (1, 2) is configured toothless.

7. The gear as set forth in claim 6, wherein the angular range is approximately 270°.

8. The gear as set forth in any one of claims 1 to 7 wherein the gear comprises in addition at least one spur gear (6), the teeth of which are arranged on a circle.

9. The gear as set forth in any one of claims 1 to 8 wherein the at least one gear rack (3, 4, 5) is configured ramped.

10. The gear as set forth in claim 9 wherein the at least one gear rack (3, 4, 5) comprises a middle tooth at its apex.

11. The gear as set forth in any one of claims 1 to 10 wherein the toothed structure comprises at least two gear racks (3, 4, 5) that are arranged at least in part one after another and staggered parallel to each other.

12. The gear as set forth in claim 11 wherein one of the spur gears (1, 2) each meshes with a respective one of the gear racks (3, 4, 5).

13. The gear as set forth in claims 9 and 11 wherein the at least two gear racks (3, 4, 5) arranged at least in part one after another comprise opposing ramps, each having an apex in a portion adjoining each other.

14. The gear as set forth in any one of claims 1 to 11 wherein the at least one gear rack comprises at least one broad and at least one narrow portion (3', 7', 8'), wherein, depending on a position of the spur gears (1, 2), a first spur gear (1) meshes with the narrow portion (3') or at least one other spur gear (6) meshes with the broad portion (7', 8'), respectively.

15. The gear as set forth in any one of claims 1 to 14 wherein the at least one gear rack (3, 4, 5) comprises teeth arranged linear.

16. The gear as set forth in any one of claims 1 to 15 wherein the at least one gear rack (3, 4, 5) comprises teeth arranged along a curved line (K).

17. The gear as set forth in any one of claims 1 to 16 wherein the radius of curvature (r) of the curve (10) that has the minimum radius of curvature (r) in the contact region monotonically increases, starting from the minimum radius of curvature (r), over an angular range of at least 90°.

18. The gear as set forth in claim 17 wherein the angular range is at least 180°.

19. The gear as set forth in any one of claims 1 to 18 wherein in a center position of the steering gear the distance between the axis of rotation (12) of the spur gears (1, 2) and the contact region of the at least one of the spur gears (1, 2) with the toothed structure (3, 4, 5, 7, 8) is a minimum.

20. The gear as set forth in any one of claims 1 to 19 wherein a first and a second of the at least two spur gears (1, 2) each comprises teeth (11) arranged along a respective curve (10), wherein each of these curves (10) comprises a radius of curvature (r) which monotonically increases over an angular range of more than 90° of this curve (10).

21. The gear as set forth in claim 20 wherein the first and the second of the at least two spur gears (1, 2) are arranged mirror symmetrical.

22. The gear as set forth in claim 20 or claim 21 wherein a region of the first spur gear (1) with minimum radius of curvature (r) and a region of the second spur gear (2) with minimum radius of curvature (r) point in the same direction.

23. The gear as set forth in any one of claims 20 to 22 wherein a third spur gear is arranged on the common axis of rotation (12) congruent with the first spur gear, but staggered parallel thereto.

## Revendications

1. Mécanisme de direction progressif pour un véhicule, comportant :
- au moins deux pignons droits (1, 2), qui sont aptes à tourner autour d'un axe de rotation (12) commun, et
- un organe denté (3, 4, 5, 7, 8) dans lequel engrènent les pignons droits (1, 2), sachant que
- au moins un des pignons droits (1, 2) comporte des dents (11) agencées le long d'une courbe (10), ladite courbe (10) ayant un rayon de courbure (r) qui croît de manière monotone sur une zone angulaire de plus de 90° de la courbe (10),
- l'organe denté (3, 4, 5, 7, 8) comporte au moins une crémaillère (3, 4, 5), et
- dans une position centrale du mécanisme de direction, la courbe (10), à rayon de courbure (r) croissant, de l'un des pignons droits (1, 2) au moins comporte un rayon de courbure (r) minimum dans une zone de contact de ce pignon droit (1, 2) avec l'organe denté (3, 4, 5, 7, 8).

2. Mécanisme de direction selon la revendication 1, dans lequel la courbe (10) d'au moins un des pignons droits (1, 2) est une spirale.

3. Mécanisme de direction selon la revendication 1 ou 2, dans lequel la courbe (10) de l'un des pignons droits (1, 2) au moins comporte un centre qui coïncide avec l'axe de rotation (12) des pignons droits (1, 2).

4. Mécanisme de direction selon la revendication 2 ou 3, dans lequel la courbe (10) est une spirale logarithmique au moins par zones.

5. Mécanisme de direction selon la revendication 4, dans lequel la courbe (10) est une spirale logarithmique sur au moins une zone angulaire de 90°.

6. Mécanisme de direction selon l'une quelconque des revendications 1 à 5, dans lequel les dents (11) d'au moins un des pignons droits (1, 2) sont agencées sur la courbe (10) sur une zone angulaire de plus de 180° et de moins de 360° et dans lequel une zone périphérique restante de ce pignon droit (1, 2) est réalisée sans dent.

7. Mécanisme de direction selon la revendication 6, dans lequel la zone angulaire mesure à peu près 270°.

8. Mécanisme de direction selon l'une quelconque des revendications 1 à 7, dans lequel le mécanisme de direction comporte en plus au moins un pignon droit (6), dont les dents sont disposées sur un cercle.

9. Mécanisme de direction selon l'une quelconque des revendications 1 à 8, dans lequel ladite au moins une crémaillère (3, 4, 5) est réalisée avec une inclinaison.

10. Mécanisme de direction selon la revendication 9, dans lequel ladite au moins une crémaillère (3, 4, 5) comporte une dent centrale au niveau de sa zone la plus élevée.

11. Mécanisme de direction selon l'une quelconque des revendications 1 à 10, dans lequel l'organe denté comporte au moins deux crémaillères (3, 4, 5) qui sont disposées au moins en partie l'une derrière l'autre et sont décalées parallèlement l'une par rapport à l'autre.

12. Mécanisme de direction selon la revendication 11, dans lequel chacun des pignons droits (1, 2) engrène avec respectivement une des crémaillères (3, 4, 5).

13. Mécanisme de direction selon les revendications 9 et 11, dans lequel lesdites au moins deux crémaillères (3, 4, 5) disposées au moins en partie l'une derrière l'autre ont des pentes opposées l'une à l'autre et dans lequel elles comportent chacune une élévation maximale dans une zone adjacente.

14. Mécanisme de direction selon l'une quelconque des revendications 1 à 11, dans lequel ladite au moins une crémaillère comporte au moins une zone large (7', 8') et une zone étroite (3'), sachant qu'en fonction d'une position des pignons droits (1, 2), un premier pignon droit (1) engrène dans la zone étroite (3') et au moins un autre pignon droit (6) engrène dans la zone large (7', 8').

15. Mécanisme de direction selon l'une quelconque des revendications 1 à 14, dans lequel ladite au moins une crémaillère (3, 4, 5) comporte des dents qui sont agencées sur une ligne droite.

16. Mécanisme de direction selon l'une quelconque des revendications 1 à 15, dans lequel ladite au moins une crémaillère (3, 4, 5) comporte des dents qui sont agencées le long d'une ligne courbe (K).

17. Mécanisme de direction selon l'une quelconque des revendications 1 à 16, dans lequel le rayon de courbure (r) de la courbe (10), qui comporte le plus petit rayon de courbure (r) dans la zone de contact, croît de manière monotone à partir du rayon de courbure (r) minimum sur une zone angulaire de 90° au moins.

18. Mécanisme de direction selon la revendication 17, dans lequel la zone angulaire mesure au moins 180°.

19. Mécanisme de direction selon l'une quelconque des revendications 1 à 18, dans lequel, dans une position centrale du mécanisme de direction, la distance entre l'axe de rotation (12) des pignons droits (1, 2) et la zone de contact d'au moins un des pignons droits (1, 2) avec l'organe denté (3, 4, 5, 7, 8) est égale au minimum.

20. Mécanisme de direction selon l'une quelconque des revendications 1 à 19, dans lequel un premier et un deuxième desdits au moins deux pignons droits (1, 2) comportent des dents (11) agencées dans chaque cas le long d'une courbe (10), sachant que chacune de ces courbes (10) a un rayon de courbure (r) qui croît de manière monotone sur une zone angulaire de plus de 90° de cette courbe (10).

21. Mécanisme de direction selon la revendication 20, dans lequel le premier et le deuxième desdits au moins deux pignons droits (1, 2) sont disposés symétriquement.

22. Mécanisme de direction selon la revendication 20 ou 21, dans lequel une zone du premier pignon droit (1) avec un rayon de courbure (r) minimum et une zone du deuxième pignon droit (2) avec un rayon de courbure (r) minimum sont orientées dans la même direction.

23. Mécanisme de direction selon l'une quelconque des revendications 20 à 22, dans lequel un troisième pignon droit est disposé sur l'axe de rotation (12) commun de manière à coïncider avec le premier pignon droit, mais en étant décalé parallèlement à celui-ci.
